# EUROPEAN PATENT SPECIFICATION

(11) **EP 1 165 361 B1**
(45) Date of publication and mention of the grant of the patent: **20.10.2004**
(21) Application number: 00901490.3
(22) Date of filing: 01.02.2000
(51) Int. Cl.: B62J 6/06

(54) **AN ILLUMINATING MEANS FOR A VEHICLE**
BELEUCHTUNGSVORRICHTUNG FÜR FAHRZEUG
DISPOSITIF D'ECLAIRAGE POUR VEHICULE

(30) Priority: 01.02.1999 DK 4500099 U; 08.03.1999 DK 1000399 U; 29.03.1999 DK 1400399 U; 06.04.1999 DK 45699; 19.04.1999 DK 52299; 28.05.1999 DK 75899; 15.07.1999 DK 269900009 U; 23.08.1999 DK 115999; 06.09.1999 DK 124599; 13.09.1999 DK 128099; 13.09.1999 DK 128999; 26.11.1999 DK 169799
(43) Date of publication of application: 02.01.2002
(73) Proprietor: ReElight APS, 1061 Copenhagen K (DK)
(72) Inventor: PEDERSEN, Troels, DK-3600 Frederikssund (DK)
(74) Representative: Plougmann & Vingtoft A/S
(86) International application number: PCT/DK2000/000042
(87) International publication number: WO 2000/046097

(56) References cited:
- EP-A- 0 026 950
- WO-A-96/05999
- DE-A- 4 324 779
- DE-A- 4 420 589
- US-A- 5 128 840
- US-A- 5 590 946
- PATENT ABSTRACTS OF JAPAN vol. 012, no. 351 (E-660), 20 September 1988 (1988-09-20) & JP 63 107446 A (NORIO AKAMATSU), 12 May 1988 (1988-05-12)

## Description

### Technical Field

It is an object of the present invention to provide an illuminating means e.g. for a bicycle. The illumination means may be adapted for signalling or even for illumination of the road: It is an object of the invention to provide a device which is simple and cheap to produce and yet reliable and which provides a good protection against theft and a good performance.

### Background of the Invention

Illuminating means for vehicles such as bicycles are known in various forms. Some devices may be adapted not only as an attention signal for other users of the road but also to illuminate the road. Some devices may just reflect light transmitted by other users or may reflect the street light and some devices comprises an electric light bulb provided with power from a battery or from a dynamo attached to the bicycle.

The present invention relates to a signalling device with a light bulb or a LED provided with power from a generator. The generator comprises a coil attached to the frame of the bicycle and magnets attached e.g. to a wheel of the bicycle. Such devices are known e.g. from US 5,590,946, and typically they are highly reliable, provides good protection against theft and can be produced with very low costs. The problem is that the performance compared, to traditional dynamos, are low.

The present invention relates to a device which offers an improved performance of the generator in relation to the weight and the price of the parts and that is yet simple and reliable.

### Description of the invention

It is the object of the present invention to provide an illuminating means for a bicycle or any other vehicle comprising two parts movable in relation to each other, such as a wheel and the fork or the crank and the frame of a bicycle. The illuminating means according to the invention comprises:at least one coil attachable to a first part of the vehicle, the coil having a first and a second electrical output, one or more magnets having a surface area facing the coil and attachable to a second of the two parts of the vehicle, and a plurality of light emitting means, **characterised** in that the coil and the magnet(s) are adapted to generate, upon movement of the first part in relation to the second part, a first electrical current from the first electrical output of the coil to the second electrical output of the coil and a first voltage between the first and second electrical outputs and a second electrical current from the second electrical output of the coil to the first electrical output of the coil and a second voltage between the first and second electrical outputs, and wherein the first and second electrical currents are different and wherein the first and second voltages are different.

The first and a second electrical output may be the two free ends of the wire of the windings.The light emitting means may be LED's, traditional light bulbs, fluorescent tubes or any other kind of light emitting means.

The light emitting means may be divided into at least two groups of serially interconnected light emitting means. Each of the groups is connected between the first and the second electrical outputs of the coil and at least two of the groups have different numbers of serially interconnected light emitting means. In this way at least two circuits with different electrical characteristics are established.

Preferably at least one of the illuminating means is a light emitting LED (LED) or similar means that emits light with a low power consumption. LED's furthermore provides the feature of conducting a current in only one direction which is an aspect of a preferred embodiment of the present invention. According to this embodiment at least two of the groups of serially interconnected light emitting means comprises at least one LED's. At least one of the groups comprises a LED which is adapted to conduct a current from the first electrical output of the coil to the second electrical output of the coil and at least one other of the groups comprises a LED which is adapted to conduct a current from the second electrical output of the coil to the first electrical output of the coil.

According to the invention the coil and the magnet(s) are adapted to generate different electrical currents and voltages between the first and second respectively between the second and the first electrical output of the coil, upon movement of the first part in relation to the second part. It has been found that a voltage from the first to the second electrical output of the coil is in the size of 1-3 volt such as in the size of 2 volt and preferably the voltage from the second to the first electrical output of the coil is in the size of 2-6 volt such as in the size of 4 volt is appropriate for the use of one or two LED's in each direction.

In a preferred embodiment of the invention the LED's are chosen so that the total voltage barrier of all of the LED's adapted to conduct a current from the first electrical output to the second electrical output of the coil is in the size of 50-100 pct of the voltage from the first to the second electrical output of the coil and all of the LED's adapted to conduct a current from the second electrical output to the first electrical output of the coil is in the size of 50-100 pct of the voltage from the second to the first electrical output of the coil.

According to another feature of the invention, at least one of the magnets is positioned adjacently to a first element of a magnetically conducting material having a surface area facing the coil which is larger than that of the at least one of the magnets. The magnetically conducting material may simply be a piece of metal attached to the back of the magnet or fixated together with the magnet, e.g. in a plastic casing of the magnet.

According to a preferred embodiment the first element comprises a first and a second part positioned adjacently in the direction of movement. The magnet or magnets are positioned between the element and the coil so that the smallest distance, during movement of the magnet relative to the coil, between the coil and the surface of the first part is larger than that between the coil and a surface of the second part of the first element. This can be achieved e.g. by folding the piece of metal, to which the magnet is attached, in a direction towards the coil or in any other way providing a piece of metal which in one end extends towards the coil and with a magnet attached to the other end, between the element and the coil. In this way a virtual magnetic pole is created at the end extending towards the coil, and the polarity of the virtual pole is opposite the polarity of the part of the magnet facing towards the coil.

The element may be formed and adapted so that the smallest distance, during movement of the magnet relative to the coil, between the element and the coil is the same or substantially the same as the distance between the magnet(s) and the coil.

In a further preferred embodiment of the invention the coil comprises a core element having two surfaces such as the two free ends of the coil or such as surfaces of any magnetically conductive elements attached to the core. The two surface parts are preferably positioned adjacently in a direction towards the magnet(s), so that they are close to the magnet(s) compared with the coil. The two surface parts may be positioned extending towards the magnet(s) by forming the core into the shape of a horse-shoe or a U, where the two free ends are facing the magnet(s) or it may be a core of any shape whereto the surfaces of magnetically conductive element(s) extending towards the magnet(s) are attached.

The coil may be positioned in any direction in relation to the magnet(s) but a preferred position is with a longitudinal axis extending at least substantially perpendicularly to the direction of movement and so that, at a predetermined position where the distance between the magnet(s) and the coil is smallest, the axis extends toward the magnet(s). This is a preferred way of positioning the coil, since it eases the mounting of the coil, e.g. on a bicycle.

In order to improve the performance of the coil and magnet(s) a further preferred embodiment of the invention relates to the distance between the two surfaces of the core or of the elements attached to the core and extending towards the magnets. The distance may preferably be at least substantially the same as the distance between the magnet and the part of the element adjacent the magnet, which is bend in a direction towards the coil. The positive effect herein can also be achieved by placing two or more magnets with substantially the same distance as between the surfaces of the core. The magnets should preferably be positioned with alternating plus and minus poles facing the coil.

In a preferred embodiment the cross-sectional area of a part of the core is smaller than at least substantially any cross-sectional area of either of the elements to which the magnet(s) or the core is attached. In this way, - dependent on the alloys of the ferromagnetic material, up to, or more than 80 percent of the magnetic saturation for the material of the core is reachable.

Any magnetically conductive materials can be used for the core of the coil or for the elements attached to the core or to the magnets but Trafoperm N3 or Vacofer S1 will provide a good performance, which by knurling the surface of the core or by making the core from lamination of sheets of metal, can be improved further.

According to feature of the invention, the illuminating means comprises an element of a magnetically conducting material, the element having at least three surface parts being positioned adjacently in the direction of movement, where at least a part of the element extends through the coil, and where the smallest distance, during movement of the magnet relative to the coil, between the coil and the magnet is larger than or equal to that between any of the surface parts and the magnet. Such a plurality of surface elements will further improve the performance.

The invention furthermore relates to an illuminating means as described, and wherein the parts are sealed in fittings adapted to be mounted to a bicycle. The parts may for instance be incorporated in cast plastic elements with fittings such as bolts and flanges for attachment either to the frame of the bicycle or for attachment to flat flanges of the bicycle. Attachment of the parts to flat flanges of the bicycle provides the advantage of a solid fixation with lower risk of injuries due to parts rotating on the frame and by accident blocking e.g. a wheel of the bicycle.

### Detailed description of the invention

A preferred embodiment of the invention will now be described in detail with reference to the drawings in which:
Fig. 1 illustrates a bicycle with signal devices mounted in preferred positions,
Fig. 2 illustrates an embodiment of the invention comprising two basic parts of the invention, one part mounted to the frame of the bicycle, and the other part mounted to the wheels of the bicycle,
Fig. 3 illustrates the preferred embodiment of the basic part mounted to the frame of the bicycle,
Fig. 4 illustrates the preferred embodiment of the basic part mounted to the wheels of the bicycle,
Fig. 5 illustrates the preferred embodiment of a coil comprised in the part mounted to the frame of the bicycle,
Fig. 6 illustrates the preferred embodiments of the brackets that allow one part of the signal device to be mounted to the frame of the bicycle,
Fig. 7 illustrates a typical signal from induction in a coil,
Fig. 8 illustrates electric circuits comprising a coil and illuminating means,
Fig. 9 illustrates a typical curve for magnetic saturation of ferromagnetic materials,
Fig. 10 illustrates different embodiments of the core of the coil used in the preferred embodiment of the invention,
Fig. 11 illustrates different embodiments of one magnet and a ferromagnetic element mounted to the magnet or near the magnet,
Fig. 12 illustrates a sequence of induction in a coil as the part that comprises a single magnet passes,
Fig. 13 illustrates different embodiments of two magnets and a ferromagnetic element mounted to the magnets or near the magnets,
Fig. 14 illustrates a sequence of induction in a coil as the part that comprises the two magnets passes,
Fig. 15 illustrates an embodiment of the brackets and the mounting position of the part mounted to the frame of the bicycle.

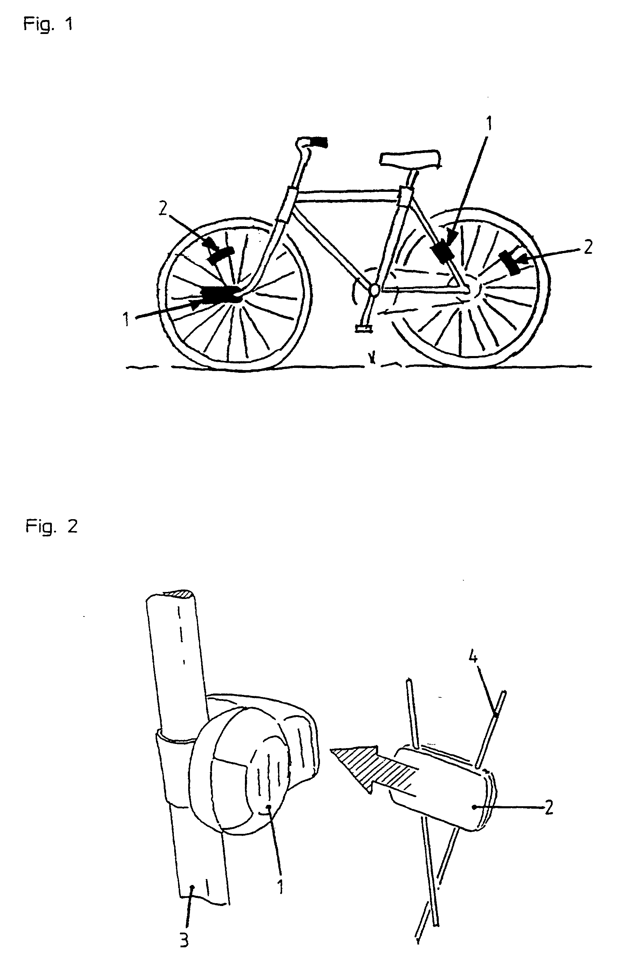

As shown in Fig. 1, the signal device is mounted to the front or the back of a bicycle. The signal device produces light signals or constant light when the bicycle is moving, and these signals may be seen in allocated angles around the bicycle or even serve as illumination of the road. The signal device may be used in daylight, at night or in bad weather such as rain or fog.

As shown in Fig. 2, the signal device comprises a first part 1 and a second part 2. The first part and the second part are mounted to the bicycle 3 such that they can move in relation to each other. By means of an example, the first part 1 is mounted to the frame of the bicycle 3, and the second part 2 is mounted to the wheel of the bicycle 4. The first part 1 may also be mounted to the wheel of the bicycle and the second part 2 is mounted to the frame of the bicycle. By means of another example, the first part or the second part can be mounted to the crank of the bicycle while the other part is mounted to the frame of the bicycle.

The second part 2 may comprise any number of permanent magnets, but in one preferred embodiment, one or two magnets are used for induction of electricity when passing the first part 1. The second part 2 is preferably mounted to one of the wheels of the bicycle. The first part is preferably mounted to the frame of the bicycle and comprises one coil. In a preferred embodiment, the first part may additionally comprise illuminating means such as one or more LED's or one or more light bulbs. The illuminating means may also be comprised in a third part mounted either to the frame of the bicycle, mounted to elements mounted to the frame of the bicycle or it may be mounted to the wheel of the bicycle.

The illuminating means may be fully driven or mainly driven by the induced electricity by means of a battery provided either in a fourth part or integrated in the second or third part. This enables the making of variants of products that may enable light to be emitted in a period after the bicycle has stopped, e.g. at a traffic light. By means of another example, the signals of electricity generated when the magnet passes the coil may be summarised with electric signals generated elsewhere, e.g. by an electronic device comprised in a third part whose circuit is connected to a battery. In this way the illuminating means may be driven by different electric signals, where at least one is generated by induction in the coil.

A bicycle may be equipped with as many parts as desired of the mentioned two basic parts 1 and 2. By means of an example, the bicycle may be equipped with three parts of the type mounted to the wheel and one part of the type mounted to the frame. In one particular embodiment, the basic part that comprises the coil also comprises the illuminating means and is mounted to the frame of the bicycle. The other basic part that comprises the magnet or the magnets is mounted in three different positions in the wheel symmetrically such that all three positions may pass the basic part mounted to the frame of the bicycle as the wheel turns.

The part 1 that comprises the coil may comprise more than one coil with different dimensions or properties in relation to the way the electric signal is generated. In addition, there may be several numbers of illuminating means such as one, two, three or more LED's or light bulbs connected to the coil or coils in different electric constellations. The coil or coils may be connected to an electric circuit that controls the electric signal generated by the coil, thus enabling the electric signal to be rectified, accumulated or summarised with other electric signals generated by the same electric circuit or another electric circuit.

The part 1 that comprises the coil may be mounted to the frame of the bicycle by different means, but in a preferred embodiment, this is done by the use of brackets. By means of an example, the part mounted to the frame of the bicycle may be integrated in some way with parts of the frame or other parts mounted to the frame of the bicycle.

The part mounted to the wheel may be mounted to the wheel or even integrated with parts of the wheel. As a preferred embodiment, the part mounted to the wheel 2 is mounted by the use of one or more spokes 4 in the wheel.

By means of an example, the part mounted to the wheel may be integrated with the tyre of the wheel, the rim of the wheel, disc brakes mounted to the wheel or with the centre part of the wheel.

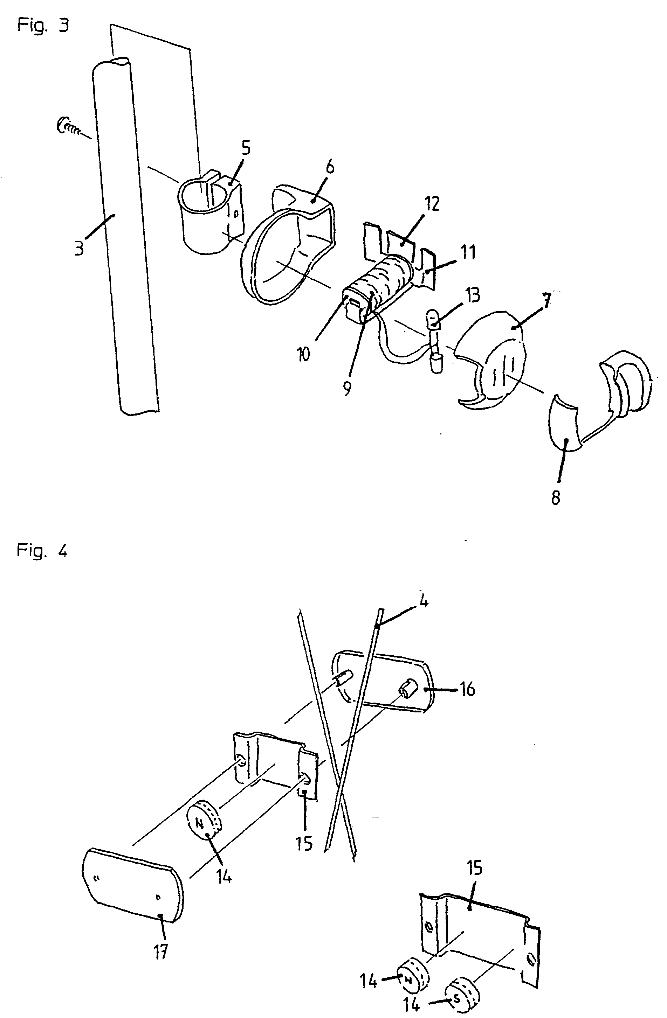

As shown in Fig. 3, a preferred embodiment of the part mounted to the frame comprises one coil 9 and the illuminating means such as two or three LED's 13. In this preferred embodiment, no electric circuit is present and instead the leads of the coil are soldered to two or three LED's which again are soldered together such that the circuit becomes very robust and reliable, e.g. for outdoor use. As a preferred embodiment, the coil and the illuminating means are comprised in the same part 1.

In a preferred embodiment, groups of serially connected LED's are arranged in parallel such that one group of one or more LED's may lead the induced current in one direction and another group of one or more LED's may lead the induced current in the other direction.

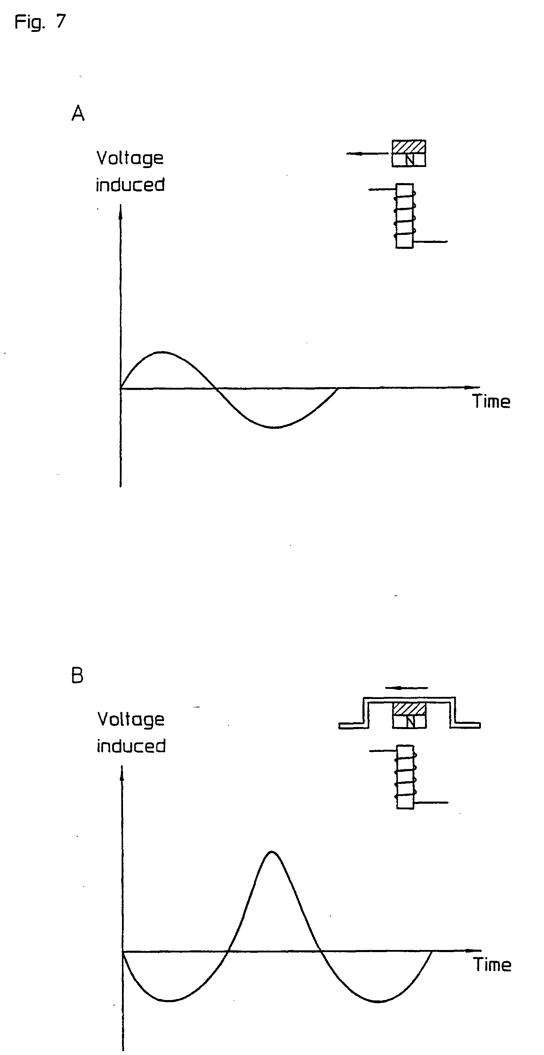

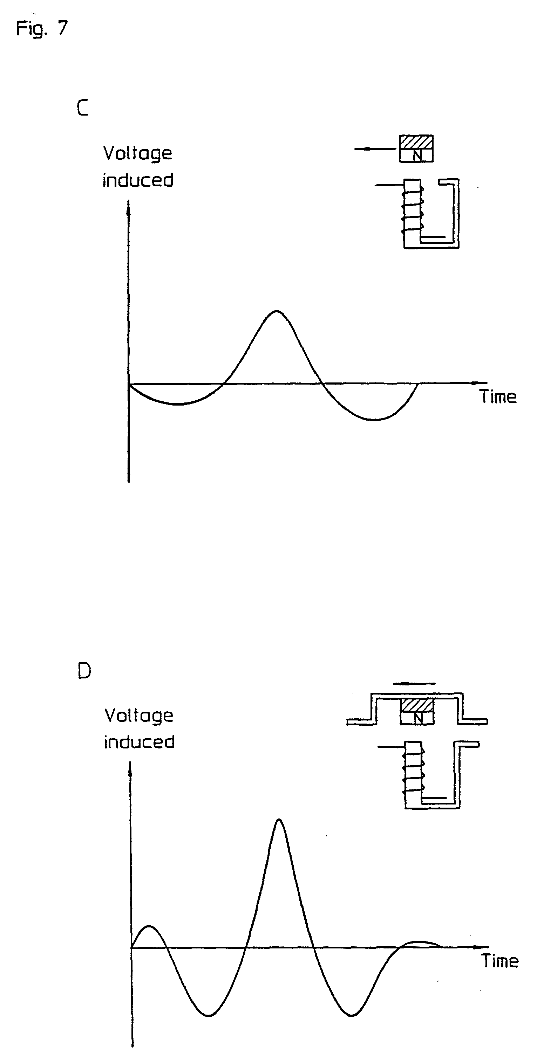

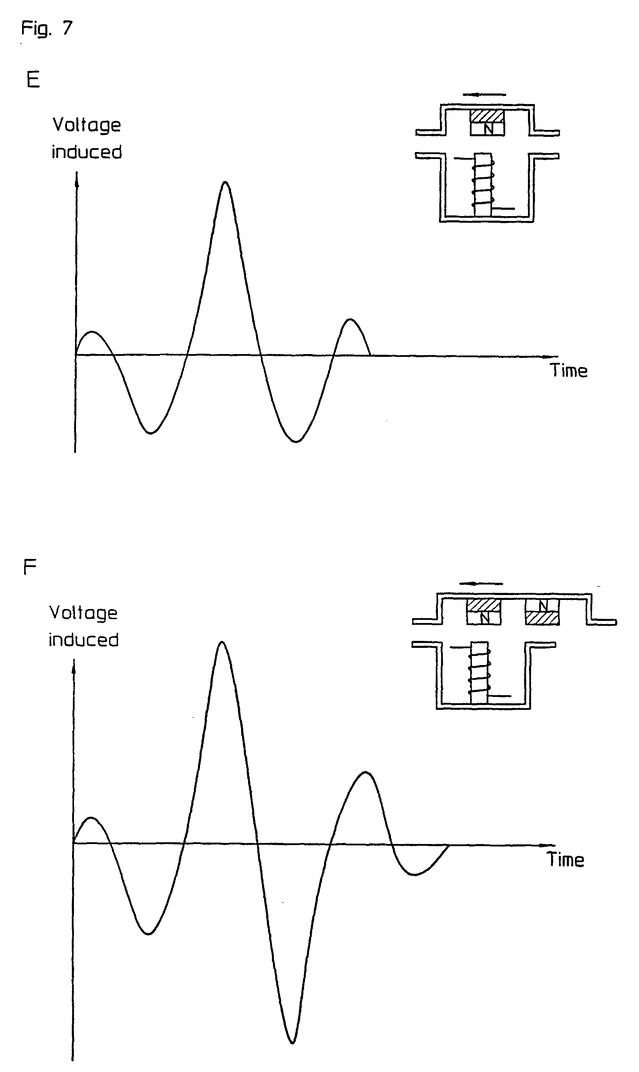

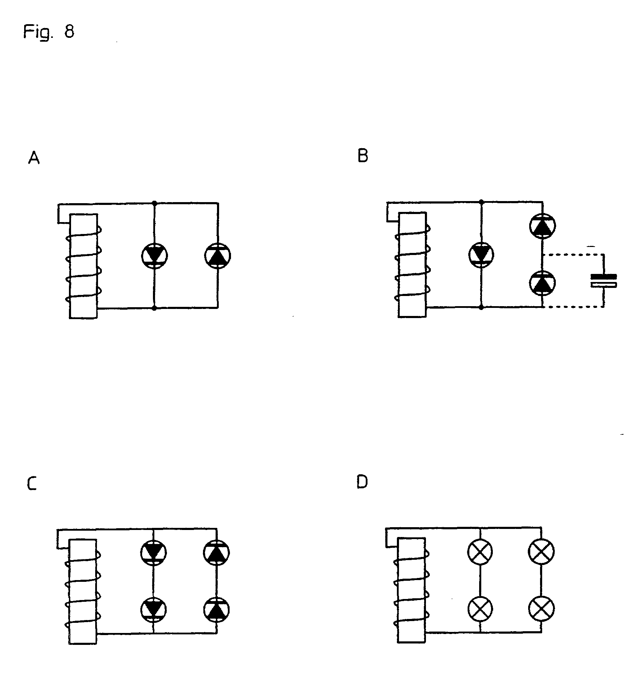

The signal of FIG. 7A clarifies this functionality but is not applicable to illuminating means in accordance with the invention. As a magnet passes the coil, the signal generated may be formed as a sinuscurve, which means that the electric current capable of flowing through the coil and the illuminating means may change direction during the induction. Such an induced signal can be seen in Fig. 7 A. When the two LED's are connected in parallel as described, the electric current can be converted into light in both half periods of the induction since one LED enlightens during flow of current in one direction and the other LED enlightens during flow of current in the other direction. In Fig. 8, preferred embodiments of circuits can be seen.

The circuit shown in Fig. 8B is of particular interest. As shown, the signal induced by the coil may be led by one LED as the current flows in one direction. When the current changes direction, it is forced to be led through two LED's connected in series. This has proved to be a very suitable circuit in order to attain a wanted compromise between efficiency and sensitivity of the signal device.

The efficiency of the circuit, including the LED's and the coil, is dependent on the relation between the inner electric resistance of the coil and the electric resistance of the illuminating means connected to the coil.

As the resistance of the illuminating means increases, a higher percentage of the electric energy is absorbed in the illuminating means, converting more of the present energy into light. In other words, the efficiency of the circuit is improved. If the resistance of the illuminating means increases, the total resistances of the coil and the illuminating means are also increased, reducing the possible flow of electric current.

These two effects work against each other. One might achieve a high efficiency using illuminating means with very high resistance, though the current that is flowing through the illuminating means are very low, resulting in a very little amount of energy absorbed in the illuminating means. The other scenario where the illuminating means have a very low resistance, the current flowing through the illuminating means and the coil may be high, but only with a little part of the induced energy to be absorbed in the illuminating means and the rest to be lost as heat generated in the coil.

The best performance of the circuit is attained when the resistance of the coil and the resistance of the illuminating means are almost the same.

A LED is not a 'real' resistor but acts as a resistor reducing the resistance as the electric current is increased. A specific standard LED used in laboratories has shown to behave as a resistor of 180 Ohm when conducting 10 mA. and a 42 Ohm resistant when conducting 50 mA.

A typical coil used in a signal device may have an inner resistance of about 100 Ohm.

If one LED is connected to the coil and electricity is induced in the coil, 60 % of the energy is absorbed by the illuminating means at a current of 10 mA. If the current is 50 mA., only 30% of the energy is absorbed by the illuminating means.

This effect, of course, can be used to make a compressor for the intensity of the illuminating signal at different levels of induction. In this way, one may compress variations in the induced electricity as the bicycle changes speed or as the gap of air between the coil and the magnets are reduced so that the intensity of an emitted light signal may be very much the same at different speeds of the bicycle. Apart from that, the effect is not wanted since the efficiency of the coil that converts energy should be as high as possible in order to reduce the need for a strong magnetic source.

One way to increase the efficiency of a circuit comprising a coil and one or more LED's is to connect the LED's in series. By doing so, the efficiency of the system is increased since more energy is absorbed by the LED's. For given values this means that two LED's connected in series can be seen as one resistor of 80 Ohm leading 50 mA. Connected to a coil with an inner resistance of 100 Ohm, 45% of the energy is absorbed in the two LED's at the 50 mA.

The current of 50 mA in the circuit forces a higher induction - approx. 20% - due to a total higher resistance in the circuit. But, as can be seen, this cannot eliminate the gained higher efficiency rising from an efficiency of 33% to an efficiency of 45% and resulting in a higher total efficiency and a higher total energy absorbed in the illuminating means as one for a given induction.

In addition, the efficiency is increased further by connecting three ore more LED's in series.

The disadvantage of connecting the LED's in series is, apart from the use of more LED's, a higher illuminating voltage. One LED must have approx. 1.8 Volts to start illumination. Therefore two LED's connected in series need approx. 3.6 Volts to start illumination. This means that the induction necessary to start the LED's for a given coil has to be doubled. In order for the device to start illuminating, the bicycle then has to obtain a higher speed, the magnets must be bigger or the coil must have more windings. More windings in the coil increases the inner resistance of the coil resulting in a decreased efficiency.

However, If one connects the LED's so that one LED leads the current in one direction and two or more LED's connected in series lead/s the current in the other direction, a wanted combined solution is obtained. The circuit has both high efficiency and high sensitivity. This has proven to be very attractive, especially in variants where three LED's are needed to ensure that the light emitted can be seen in the wanted angles.

This circuit is illustrated in Fig. 8B.

As a variant, the circuit shown in Fig. 8B can additionally have a capacitor connected in parallel with one of the two leads connected in parallel. The effect of this capacitor has not been proven but should improve the circuit by storing energy.

Other variants of the preferred embodiment is shown in Fig. 8A, Fig. 8C and Fig. 8D where the LED's are replaced with other illuminating means such as light bulbs or fluorescent elements.

The coil 9 in the part 1 may be a coil without a solid core material or it may have such one or several ones. Additionally, a solid core of the coil may have different embodiments such that different properties of this core is achieved. The material of the core can be magnetically conductive such as iron or alloys known as highly magnetically conductive.

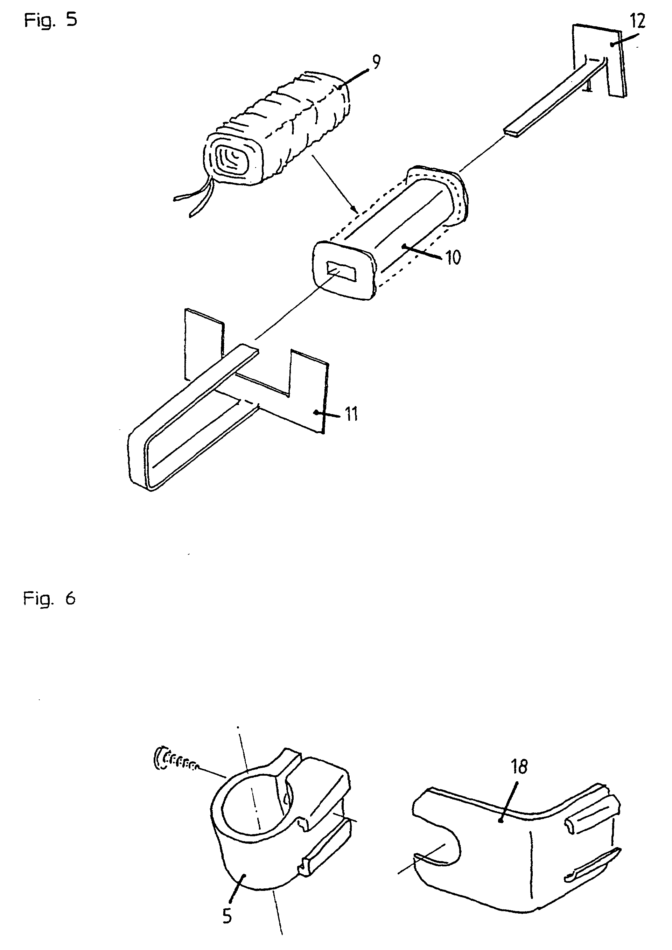

In a preferred embodiment, the core material is ferromagnetic steel plate formed in two separate elements 11 and 12 as shown in Fig. 5. The area of the core inside the coil is minimised such that the magnetic flow exceeds 80% of the magnetic saturation value for the core material. Such saturation can, of course, not be achieved for all the positions between the part comprising the magnets and the part comprising the coil. The excess of the 80% is therefore achieved in at least one possible position between the coil and the part 2 in the wheel. By means of an example, this position can be the place where one magnet 14 is positioned as close to the core of the coil 11 or 12 as possible, limited only by the housings of the two parts 6, 8 and 17.

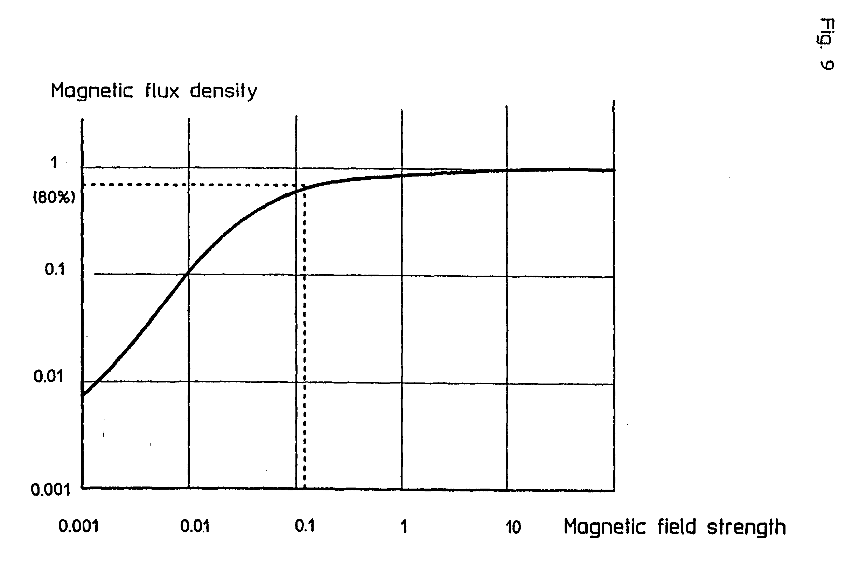

As shown in Fig. 9, a ferro-magnetically conductive material may have a high ability to conduct magnetic flux. Without trying to explain the more complicated physical phenomenon of the ferromagnetic effect, the phenomenon, generally speaking, is similar to an amplification of the magnetic field and therefore leads to an increase in induction when used as core material in a coil instead of e.g. a core of air. When used elsewhere, the ferromagnetic effect can be thought of as magnetic conductivity. The conductivity or amplification, however, is limited to ferro-magnetic materials such as steel plate. At a sudden point, the magnetic amplification starts to weaken which means that even though the magnetic strength is increased the magnetic flux density through the material is not increased as will be the case for a weaker magnetic field strength. When full saturation is achieved, the magnetic flux density through the material can only be increased by increasing the magnetic field strength considerably.

One may think of this effect as a combined magnetic limiter and compressor. Even though this is not the full story of magnetic saturation in ferromagnetic materials, it is primarily the reduction in magnetic amplification or conductivity above the 80% level of saturation that is of great interest in connection with this invention.

Normally, saturation occurs somewhere between 1.2 Tesla and 2.1 Tesla of magnetic flux density for ferromagnetic materials. The saturation does not arise suddenly but starts somewhere around 80% of the value of magnetic saturation for the material. This is, however, dependent on the alloys of the ferromagnetic material. With a value of saturation below 80%, most ferromagnetic materials respond almost linearly to an increase in the strength of the magnetic field.

This phenomenon can be utilised in different ways. First of all it is desired that the core of the coil responds with the magnetic behaviour above the 80% value of saturation since it then becomes less sensitive to variations in the air gap between the magnets and the coil when passing each other without reducing the efficiency of the system. The amount of induced electric power in the coil is almost inversely proportional to the size of the air gap between the two parts when passing each other. When a signal device is constructed, it is therefore dimensioned so that it will work properly with the largest air gap expected. If the air gap somehow decreases due to variations in mounting or replacement of the wheels, the electric output of the coil will increase due to a higher magnetic fluctuation, leading to frustrated users not knowing if the device is properly mounted or adjusted or, in worst case, the higher induction leads to damage of the illuminating means.

Secondly, due to the wanted saturation of the core inside the coil, a small area is attractive since it enables the average diameter of the core windings to be decreased, leading to a reduction of the inner resistance of the coil without reducing the number of windings.

The smallest area of the core material does not necessarily have to be placed inside the coil,. By means of an example, the core material can have an embodiment so that parts of it are outside the core helping to fetch the magnetic field from the part 2 passing and thus having areas as small or smaller than inside the coil that at some places are exceeding 80% of the magnetic saturation.

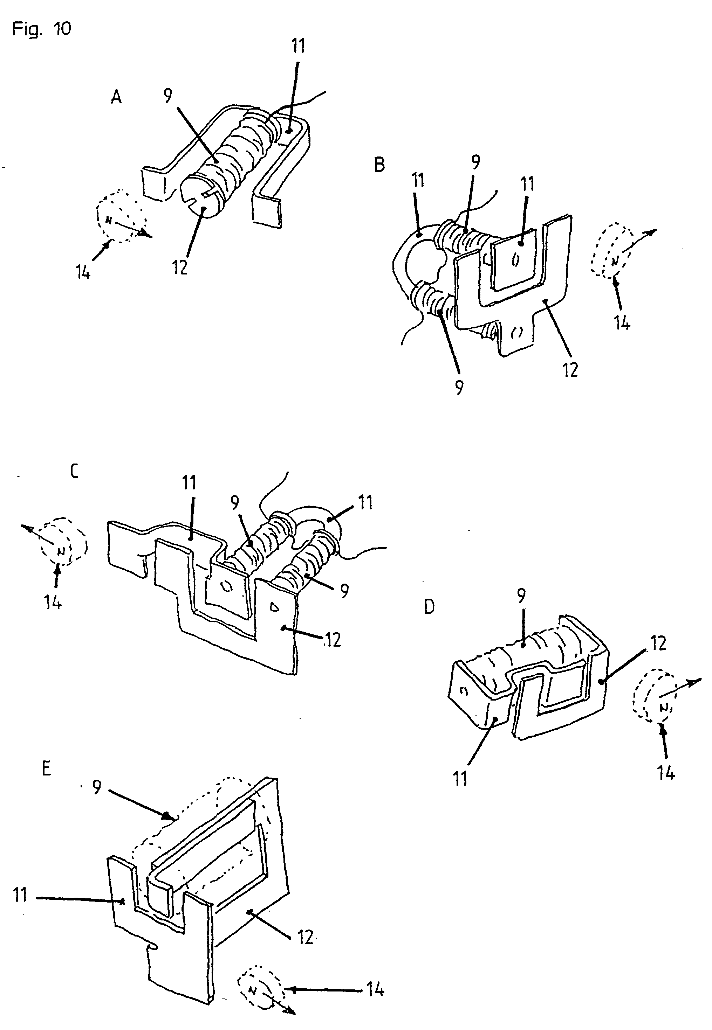

As shown in Fig.5, the core material 11 and 12 has a preferred embodiment where it is formed with large areas pointing towards the part that comprises a magnetic source preferably placed in the wheel. At least one of the core elements is formed so that it may be passed by a magnet in the wheel more than one time as the magnet passes the part that comprises the coil. The core 11 and 12 may have an embodiment where they have two flaps formed such that they may be positioned next to the flaps of the other element. In one preferred embodiment, the part 11 has two flaps and the part 12 has one. In .this way, a magnetic source, e.g. the north pole of a magnet, passing the core 11 and 12 may change the direction of the magnetic field inside the coil 9 more than one time by, in a sequence, first magnetising the first flap of part 11,then the flap of part 12 and then the other flap of part 11. In this way, the direction of the magnetic field changes twice instead of one time. This is a great advantage since it decreases the exploitation of the magnetic source. Other embodiments of the core suitable for other types of embodiments of the coil and with more flaps are illustrated in Fig. 10.

The embodiment of the core is very much influenced by the design of the coil, especially the direction of the coil. As shown in Fig. 10, the coil may be designed with centre axis aligned with the direction of movement of the parts comprising the magnets instead of, as a preferred embodiment, centre axis aligned or almost aligned with the centre axis of the wheels - or the axis of rotation.

As shown in Fig. 5, the coil 9 comprised in the part 1 is illustrated as a slick coil. As a preferred embodiment, this coil is made by windings of copper, even though the material may be any electrically conductive material, so that the number of windings in a layer of windings is four times or more the number of layers of windings. Alternatively this may be expressed as the length of the coil having windings being four times or more the average thickness of the windings. The windings are wound on a plastic core 10 fixating the core plates 11 and 12 that form the core of the coil.

The inner resistance of the coil 9 as well as the resistance of the illuminating means 13 are important for the efficiency of the signal device. A reduction in the inner resistance of the coil can be achieved in different ways. It is, however, desired that the coil has as many windings as possible and as little resistance as possible, thus using a minimum of the expensive and heavy copper.

It is found that the best way to obtain a small and light coil using only little copper is by making the coil slick, that is, long and thin. If one is to make a coil with a given number of windings, one may choose to make the coil very short. This means that it must have a large number of layers if a sudden number of windings are to be added. This again leads to a high average diameter of the windings, which leads to the use of a long copper thread for the given number of windings. A long thread gives more inner resistance than a short one, so the inner resistance is high for such a coil. The other extreme is to make the coil very thin but long. In this way, the average diameter of the windings are kept low, thus reducing the inner resistance of the coil.

It may seem logical to make all coils short and thin in order to increase the efficiency when used for induction. The long and thin coil, however, has the disadvantage that the volume of the core is increased. This means more losses due to magnetic hysteresis and heavier electric losses during magnetisation of the core material. Additionally, the length of the core is increased, leading to higher magnetic resistance in the magnetic circuit that the core is a part of. Such resistance might not be tolerated in normal magnetic circuits but is not of great importance in this signal device. In a signal device as treated here, the gaps of air necessary between the two parts passing each other may be 2 mm to 6 mm wide and therefore represent a very large magnetic resistance 100-1000 times bigger than the ones in the core of the coil and therefore the length of the core of the coil is less important.

As shown in Fig. 4, a preferred embodiment of the part 2 mounted to the wheel comprises one or two magnets 14. If two magnets are used, the magnets in a preferred embodiment are mounted so that their opposite magnetic poles are facing the coil or the core of the coil. These magnets can be coin-like magnets magnetised in the direction of their centre line. The magnet or magnets may be mounted facing their backside towards a ferromagnetic element such as a plate 15 that may vary in shape and size depending on the way the magnets are mounted to the wheel and in the housing. Further the magnet or magnets are comprised in a housing 16 and 17 made of plastic or a suitable metal. In a preferred embodiment, the part mounted to the wheel has a fixating feature that enables it to be fastened between two spokes 4.

In an embodiment with two magnets, the two magnets may be positioned aligned with the direction of movement so that they pass the coil in a sequence. In a preferred embodiment is must be ensured that the magnets at one time during their passage of the core of the coil may be positioned so that their opposite magnetic poles may magnetise one end of the coil each. In this way, the best use of the magnets is achieved, though the spacing between the two magnets can be bigger or smaller creating different properties of the induction such as many impulses instead of strong impulses. The spacing of the two magnets does not exceed the distance between two spokes on the side of the wheel that they are mounted in since it is then similar to the use of two parts comprising one magnet with magnetic opposite orientated magnets.

In a preferred embodiment, the magnets are aligned so that that the planes of the surface of the magnetic poles are substantially parallel to the plane in which the wheel is rotating, or they may be angled to that plane. By means of an example, the magnets may be orientated so that set planes are perpendicular to the plane in which the wheel is rotating.

Further the planes of the surface of the magnetic poles may be substantially parallel to the flaps of the core or to a plane perpendicular to the centre line of the core of the coil. It may, however, also be that said planes are angled to said flaps or even perpendicular to the flaps.

The important factor when constructing the magnetic part in the wheel is to use the magnetic source as well as possible considering the need for an air gap between the two basic parts. This means that a good constructed magnetic part is one that results in high induction in the coil when compared to other magnetic sources on either weight, cost or volume.

It has been found that the magnets in the signal device are a cost driver and should be kept as small as possible. Additionally, users have expressed that it is important for them that the part comprising the magnet or magnets does not have large volumes making them bulky or a weight that is large enough to create notable imbalance when the wheel is turning during ride. The challenge is therefore, as mentioned, to create a large fluctuation in the core of the coil with as little magnetic material as possible when the magnetic material passes the coil.

An important issue in this optimisation is that, from a magnetic-circuit point of view, there must be a large gab of air between the magnet and the core of the coil. The reason for this is that both the part comprising the magnet and the part comprising the coil must be comprised in a housing and that they must be able to pass each other without touching each other during movement of the bicycle. Further the gab must be expected to have a sudden size, e.g. 2 mm to 6 mm, due to the mounting situation where a user must be able to mount the device without using special equipment or precision tools.

The circuit consisting of the core of the coil, the gab of air between the two parts of the device, the magnet and the ferromagnetic element behind the magnet is central for making the optimisation. This circuit may be treated in the same way as an electronic circuit calculating the currents and voltages of the system. However, in this case it will be magnetic force, magnetic flux and magnetic flux density.

If one treats the above-mentioned circuit of the device as such, one finds that two important resistances in making a very large magnetic flux is the gab of air and the magnet itself. Different means of reducing the gab of air is treated elsewhere and is not the subject of this invention, but the resistance of the magnet is, however, of interest here. In some literature on patents, one finds examples of magnetic flux through the core of the coil that is maximised for a given amount of magnetic material by shaping the magnet in order for it to be as close as possible to both ends of the core of the coil with the two magnetic poles of the magnet. This may be a U-shaped magnet with the same length of the coil so that the two ends of the magnet is positioned near the ends of the coil at some point during passing, thus maximising the magnetic flux.

This is, however, not the best use of the magnetic material since the magnet itself contributes with a large magnetic resistance, thus reducing the possible magnetic flux through the whole circuit of core, gab of air and magnet. The resistance of the magnet is almost the same as for the gab of air which again is 100 to 1000 times as much as for ferromagnetic materials. Therefore trying to make a long U-shaped magnet, given the amount of magnetic material, the area of the magnet may be small. Even though the magnetic field strength of a long magnet is bigger than that of a small magnet, it can be proven that the reduction in area of the long magnet reduces the possible magnetic flux density through the magnet and the coil.

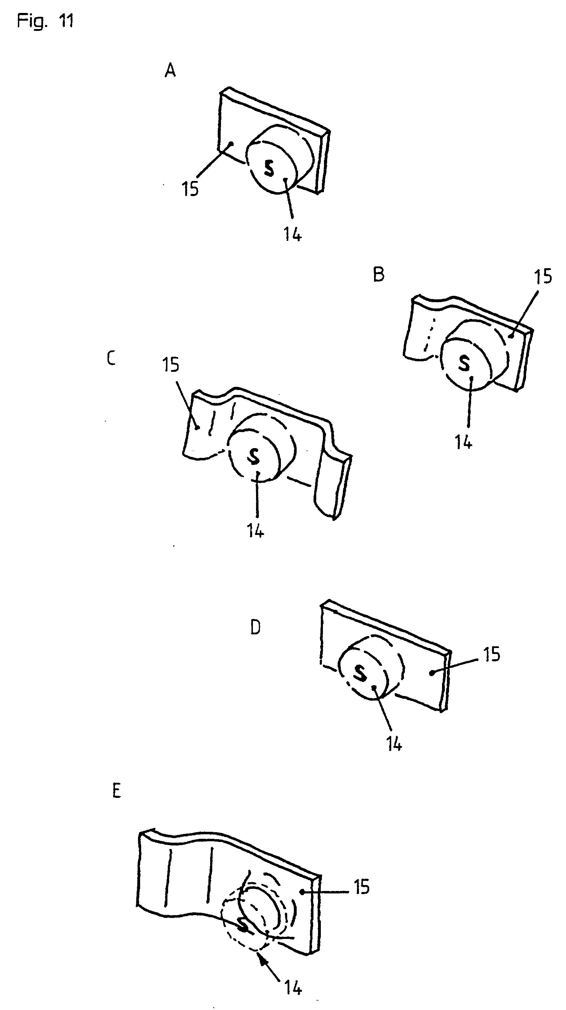

It is therefore preferred that a U-shaped magnet circuit is formed from two elements: a magnet and a ferromagnetic element. In this way, the magnetic material 14 can be formed properly, thus reducing the magnetic resistance of the magnet. The leading of the magnetic field to another end of the coil is done by the ferromagnetic material 15. This embodiment leads to the use of one magnet 14 very short in the direction of magnetisation but with a large diameter to minimise the magnetic resistance. This can be a coin-like magnet as the said preferred embodiment. The ferromagnetic element 15 can be an element formed as a wing or flap mounted to the magnet or mounted with a gab to the magnet pole not facing towards the coil. This is best seen in Fig. 11B and Fig. 11B where another embodiment than the preferred is shown.

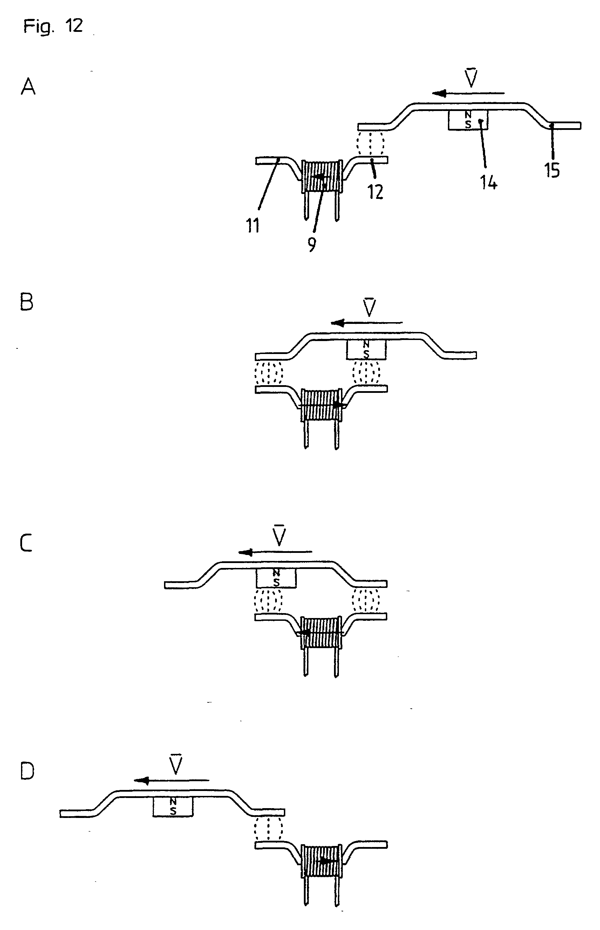

The preferred embodiment of the magnet and the ferromagnetic element is shown in Fig. 11B and Fig 11C. The ferromagnetic element has two wings or flaps. The two flaps may additionally be oriented so that they may pass the core of a coil in a sequence where the flaps of this ferromagnetic material pre-magnetise and post-magnetise the core and help to maximise the magnetic flux through the core. By means of an example, this sequence can be seen in Fig. 12.

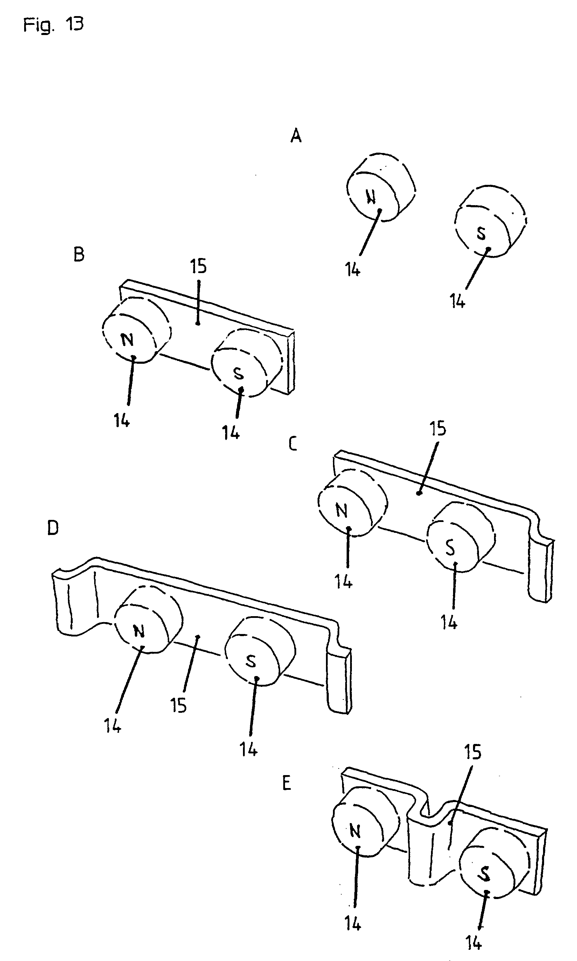

Another preferred embodiment of the magnets and the ferromagnetic element is shown in Fig. 13. In this embodiment, two magnets are orientated opposite each other, so that the south pole of the one magnet may point in one direction as the north pole of the other magnet points in the same direction.

The two magnets may be added a ferromagnetic element that helps to increase the magnetic flux density in the circuit, and to pre-magnetise and post-magnetise the core of the coil.

It has by way of experiments been found that if the magnetic mass used e.g. in a single magnet as described earlier is split into two smaller magnets 14 mounted with a backing of metal 15, the all in all exploitation of the magnetic mass is increased. This circuit is shown in Fig. 4 and Fig. 13A-E.

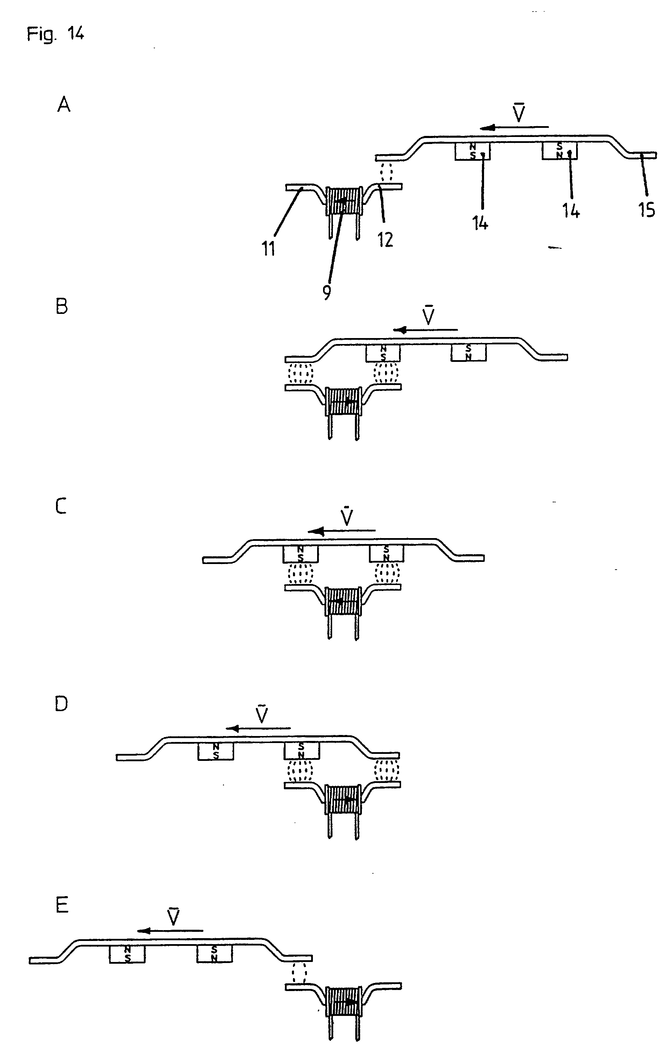

Additionally, in Fig. 14 is shown a sequence where the magnetic circuit comprising two magnets 14 and one ferromagnetic backing element 15 passes a coil.

Two important details on the ferromagnetic backing is that the flaps or the wings can be shaped so that they may have areas aligned with the magnetic pole facing the coil, and that the ferromagnetic backing of the magnets may have a shape where the magnet is mounted directly to the backing on a detail formed in the backing, thus lifting the magnet off the rest of the backing so that a reduction in short wiring between the magnet 14 and the backing 15 is reduced as shown in Fig. 11E.

The different embodiments of the core of the coil comprised in the basic part mounted to the frame and the magnet circuit comprised in the basic part mounted to the wheel may be utilised to design a signal device with certain properties. As shown in Fig. 7 A-F, the signal induced may vary as the magnetic circuit in the wheel and the core of the coil varies.

The simple induction shown in Fig. 7A does not represent an optimal exploitation of the magnetic material and is included for illustration only and does not relate to an embodiment of the invention. The magnetic flux density cannot be very high due to the long distance from the south pole of the magnet to the other end of the coil in the shown position.

If one, as proposed in this invention, uses a U-shaped ferromagnetic element adjacent e.g. the magnet south pole - in Fig. 7B, the distance between the coil and the created "virtual" magnetic south pole of the element is smaller than the distance between the "real" magnetic south pole and the core. In addition, and more important, the flaps of this ferromagnetic element helps to pre-magnetise and post-magnetise the core of the coil removing possible remaining magnetisation and thus making the induction more powerful.

The same effect can partly be achieved, as also proposed in this invention, by adding a flap on the core of the coil so that the magnetic field can be lead easily to the end of the coil pointing away from the magnet. The typical induction of this circuit is shown in Fig. 7C.

If the two added features of the magnet and the core are combined additional efficiency is gained. As shown in Fig. 7D, more impulses are generated, and laboratory tests have shown that a peek in the generated voltage double the voltage measured in a circuit as the one shown in Fig. 7A. Such an increase in voltage can, for a given outer resistance, represent a quadruplicating of the generated energy. This means that the magnetic material in the circuit in Fig. 7D utilises the magnet four times as well, measured in energy conversion.

If, in addition, the core of the coil is combined with a flap as shown in Fig. 7E, some improvements have been measured.

Finally, if the magnetic circuit comprising two magnets orientated magnetically opposite, is used as shown in Fig. 7F, much more power and much more impulses are generated. The voltage of the peak impulse in the induction is 2.5 to 3 times the one measured in Fig. 7A using the same amount of magnetic material. This means that the energy conversion for a given amount of magnetic material is 6-8 times as efficient.

The shown signals in Fig. 7 A-E are not measured values but are meant as illustrations of the observed signals in laboratory tests.

The different signals may be designed in different ways so that they may work in some preferred way with the combined connection of illuminating means. By means of an example, the circuit shown in Fig. 7D may be connected to three LED's so that the two LED's are conductive in one direction of the electric current and the one LED is conductive in the other direction of electric current. This circuit is best seen on Fig. 8B. The asymmetrical signal shown in Fig. 7D may be connected to the circuit in Fig. 8B so that the peak voltage induction is lead through the two LED's connected in series. In this way, two smaller impulses are conducted through the one LED, and the illumination of all LED's can start at the same speed of the bicycle.

The ferromagnetic parts used in this description have been referred to as being one element, but this may not be the case. The ferromagnetic element used in combination with the magnet may consist of smaller ferromagnetic elements combined to an element almost similar to the ones described in this invention. The magnets may neither be one element but an assembly of smaller magnets, together creating a magnetic source similar to that of a single magnet.

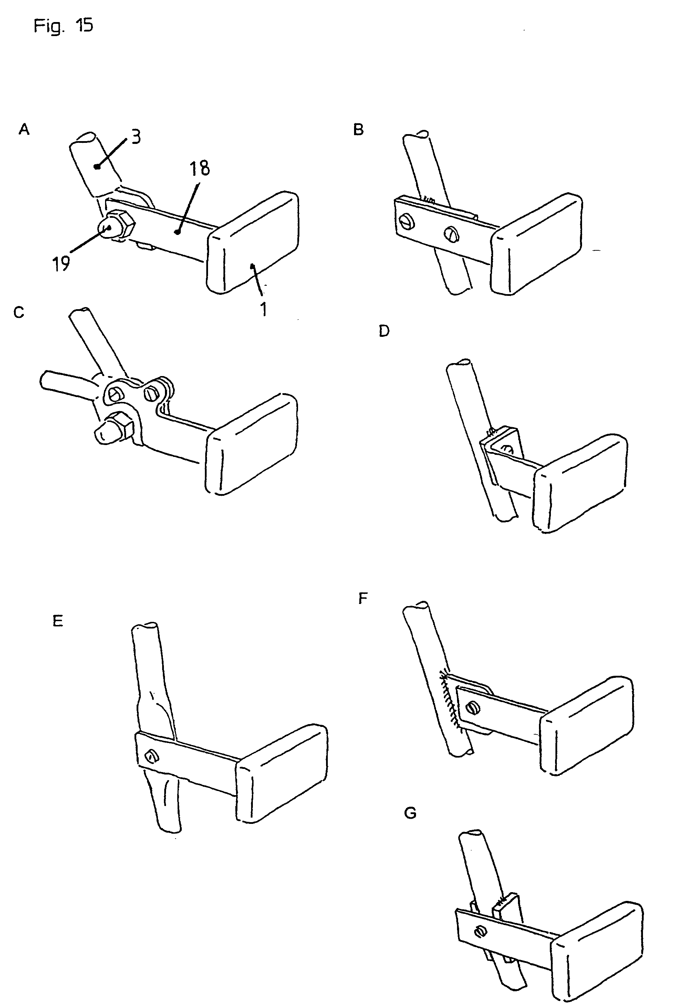

As shown in Fig. 6, the mounting of the part of the signal device mounted to the frame may be performed with at least two different brackets. In a preferred embodiment, are one type of the brackets 5 enables the part intended to be mounted to the frame 1 of the bicycle to be mounted to one of the tubes 3 of the bicycle and another bracket 18 enables the device to be mounted along with the wheel at the centre of the wheel, e.g. using the nut 19 usually used to fasten the wheel as shown in Fig. 15A and Fig. 15C. The bracket 18 is designed to be mounted to the frame of the bicycle where the frame has a flat area. By means of an example, this may be where the wheels are attached to the frame, or in flat areas integrated with the frame or at other elements mounted to the frame. Fig. 6a shows two types of brackets in preferred embodiments. The brackets may be fastened to the frame by squeezing them around a tube of the frame. The force for this squeezing can be obtained by using a screw.

When constructing a signal device as the one intended in this invention, it must be taken into account that the device is mounted near the rotating wheel with a minimum of air gab between the two basic parts. The risk is then that the part of the signal device mounted to the frame of the bicycle may be caught in the wheel, e.g. between two spokes when rotating. Users have expressed that they consider this a problem, especially in the back of the bicycle as shown in Fig. 2 where the wheel rotates such that it is possible for the spokes 4 to catch the part 1. In worst case, the further rotation of part 1 results in a locking of the wheel in the back. This is hazardous and will not be tolerated by consumers.

The accident may arise if someone or something hits the part 1 so it rotates enough for the spokes 4 or the part 2 to hit the part 1 and lock it so further rotation of the wheel in the direction shown in Fig. 2 leads to an additional rotation of the part 1.

The problem may to some extend be solved by designing the part 1 and the part 2 such that rotation of part 1 does not reduce the air gap as much. In this way, the part 1 has to be rotated a great deal before it is caught by the passing spokes 4 or part 2. Another solution is to ensure that part 1 can rotate freely in relation to the spokes by having a big gap of air between the spokes 4 and the part 1. In this way, it is only the part 2 that can hit the rotating part 1 passing it. If both part 1 and part 2 are designed with rounding, the problem may be further reduced.

Another more secure way of solving the problem is to ensure that the part 1 can only be rotated with difficulty. This is best done by designing a bracket 18 that enables the part 1 to be mounted to the frame at a position where a flat area of the frame or elements mounted to the frame are present. Two flat areas tightened together make a very good lock against rotation.

This has proven to be a much better way to secure the device.

Examples of embodiments can be seen in Fig. 15.

Finally, it should be remarked that the device can be integrated with the frame of the bicycle in different ways. By means of an example, the part mounted to the frame of the bicycle may be mounted to a flat bracket welded to the frame of the bicycle.

It must furthermore be understood that the invention can be comprised in any other means for signalling such as a bicycle bell, a cat's eye etc. or while the coil may be integrated e.g. in the frame or handbrakes of the bicycle, the magnets may be integrated in rims, spokes or tyres of the bicycle or into a gear.

## Claims

1. An illuminating means for a vehicle comprising two parts (1, 2) movable in relation to each other, the illuminating means comprising:
- at least one coil (9) attachable to a first part of the vehicle(3), the coil having a first and a second electrical output,
- one or more magnets (14) having a surface area facing the coil and attachable to a second (4) of the two parts of the vehicle, and
- a plurality of light emitting means (13),
**characterised in that** the coil and the magnet(s) are adapted to generate, upon movement of the first part in relation to the second part,
- a first electrical current from the first electrical output of the coil to the second electrical output of the coil and a first voltage between the first and second electrical outputs and
- a second electrical current from the second electrical output of the coil to the first electrical output of the coil and a second voltage between the first and second electrical outputs,
and wherein the first and second electrical currents are different and wherein the first and second voltages are different.

2. An illuminating means according to claim 1, wherein the light emitting means (13) comprise at least one LED.

3. An illuminating means according to claim 2, wherein the light emitting means (13) comprise a first and a second group of LED's and wherein the first group of LED's is adapted to conduct a current from the first electrical output of the coil to the second electrical output of the coil and wherein the second group of LED's is adapted to conduct a current from the second electrical output of the coil to the first electrical output of the coil.

4. An illuminating means according to claim 1, wherein the first voltage is in the size of 1-3 volt such as in the size of 2 volt, and wherein the second voltage is in the size of 2-6 volt such as in the size of 4 volt.

5. An illuminating means according to any of claims 3 -4, wherein the LED's in the first group of LED's have a total voltage barrier in the size of 50-100 pct of the first voltage and wherein the LED's in the second group have a total voltage barrier in the size of 50-100 pct of the second voltage.

6. An illuminating means according to any of claims 1-5, wherein at least one of the magnets is positioned adjacent a first element (15) of a magnetically conducting material having a surface area facing the coil which surface area is larger than the area of the at least one of the magnets.

7. An illuminating means according to claim 6, wherein
- the first element (15) comprises a first and a second part positioned adjacently in the direction of movement
- the at least one magnet is positioned adjacently to a surface of the first of the parts of the first element, the surface facing the coil, and
- the smallest distance, during movement of the magnet relative to the coil, between the coil and the surface of the first part is larger than that between the coil and a surface of the second part of the first element.

8. An illuminating means according to claim 7, wherein a smallest distance, during movement of the magnet relative to the coil, between the surface part of the second part and the coil is substantially the same as between the magnet and the coil.

9. An illuminating means according to any of claims 6 to 8, further comprising a second element (11) of a magnetically conducting material, the element having two surface parts being positioned adjacently in the direction of movement, where at least a part of the second element extends through the coil, and where the smallest distance, during movement of the magnet relative to the coil, between the coil and the magnet is larger than or equal to that between any of the surface parts and the magnet.

10. An illuminating means according to any of claims 6 to 9, wherein the coil is positioned with a longitudinal axis extending at least substantially perpendicularly to the direction of movement and so that, at a predetermined position where the distance between the magnet and the coil is smallest, the axis extends toward the magnet.

11. An illuminating means according to claim 9, wherein the distance between the two surface parts of the second element is substantially the same as the distance between the two second part of the first element and the magnet.

12. An illuminating means according to any of claims 9-11, wherein a plurality magnets (14) are attachable to the first of the two parts of the vehicle and wherein the distance between the magnets is at least substantially identical to the distance between the two surface parts of the second element.

13. An illuminating means according to any of claims 9 to 12, wherein a cross sectional area of a part of the second element (11) extending through the coil is smaller than at least substantially any cross sectional area of the first element (15) and parts of the second element (11) not extending though the coil.

14. An illuminating means according to any of claims 9 to13, wherein the second element (11) is made of a *soft* ferromagnetic material such as Trafoperm N3 or Vacofer S1.

15. An illuminating means according to any of claims 9-14, wherein the second element of the coil has a knurled surface

16. An illuminating means according to any of claims 9-15, wherein the second element (11) of the coil is laminated from a plurality of sheets of metal.

17. An illuminating means according to any of the preceding claims, comprising an element of a magnetically conducting material, the element having at least three surface parts being positioned adjacently in the direction of movement, where at least a part of the element extends through the coil, and where the smallest distance, during movement of the magnet relative to the coil, between the coil and the magnet is larger than or equal to that between any of the surface parts and the magnet.

## Patentansprüche

1. Beleuchtungsvorrichtung für ein Fahrzeug, die zwei zueinander bewegbare Teile (1,2) aufweist, wobei die Beleuchtungsvorrichtung aufweist:
mindestens eine Spule (9), die an einem ersten Teil (3) des Fahrzeugs anbringbar ist, wobei die Spule einen ersten und einen zweiten elektrischen Ausgang hat,
einen oder mehrere Magnete (14), der/die eine der Spule zugekehrte Oberfläche hat/haben und an einem zweiten (4) der zwei Teile des Fahrzeugs anbringbar ist/sind, und
mehrere lichtausstrahlende Einrichtungen (13),
**dadurch gekennzeichnet, daß** die Spule und der Magnet oder die Magnete eingerichtet sind, um bei der Bewegung des ersten Teils relativ zum zweiten Teil
einen ersten elektrischen Strom vom ersten elektrischen Ausgang der Spule zum zweiten elektrischen Ausgang der Spule und eine erste Spannung zwischen dem ersten und dem zweiten elektrischen Ausgang und
einen zweiten elektrischen Strom vom zweiten elektrischen Ausgang der Spule zum ersten elektrischen Ausgang der Spule und eine zweite Spannung zwischen dem ersten und dem zweiten elektrischen Ausgang
zu erzeugen,
und wobei der erste und der zweite elektrische Strom unterschiedlich sind und wobei die erste und die zweite Spannung unterschiedlich sind.

2. Beleuchtungsvorrichtung nach Anspruch 1, wobei die lichtausstrahlenden Einrichtungen (13) mindestens eine LED aufweisen.

3. Beleuchtungsvorrichtung nach Anspruch 2, wobei die lichtausstrahlenden Einrichtungen (13) eine erste und eine zweite Gruppe von LEDs aufweisen und wobei die erste Gruppe von LEDs eingerichtet ist, um einen Strom vom ersten elektrischen Ausgang der Spule zum zweiten elektrischen Ausgang der Spule zu leiten und wobei die zweite Gruppe von LEDs eingerichtet ist, um einen Strom vom zweiten elektrischen Ausgang der Spule zum ersten elektrischen Ausgang der Spule zu leiten.

4. Beleuchtungsvorrichtung nach Anspruch 1, wobei die erste Spannung in der Größenordnung von 1 bis 3 Volt ist, beispielsweise in der Größenordnung von 2 Volt, und wobei die zweite Spannung in der Größenordnung von 2 bis 6 Volt ist, beispielsweise in der Größenordnung von 4 Volt.

5. Beleuchtungsvorrichtung nach einem der Ansprüche 3 bis 4, wobei die LEDs in der ersten Gruppe von LEDs eine Gesamtspannungsbarriere in der Größenordnung von 50 bis 100 Prozent der ersten Spannung haben und wobei die LEDs in der zweiten Gruppe von LEDs eine Gesamtspannungsbarriere in der Größenordnung von 50 bis 100 Prozent der zweiten Spannung haben.

6. Beleuchtungsvorrichtung nach einem der Ansprüche 1 bis 5, wobei mindestens einer der Magnete angrenzend an ein erstes Element (15) aus einem magnetisch leitenden Material angeordnet ist, das eine Oberfläche hat, die der Spule zugekehrt ist und die größer ist als die Fläche des mindestens einen Magneten.

7. Beleuchtungsvorrichtung nach Anspruch 6, wobei
das erste Element (15) einen ersten und einen zweiten Teil aufweist, die in Bewegungsrichtung nebeneinander angeordnet sind,
der mindestens eine Magnet angrenzend an eine Oberfläche des ersten der Teile des ersten Elements angeordnet ist, wobei die Oberfläche der Spule zugekehrt ist, und
während einer Bewegung des Magneten relativ zur Spule der kleinste Abstand zwischen der Spule und der Oberfläche des ersten Teils größer ist als der zwischen der Spule und einer Oberfläche des zweiten Teils des ersten Elements.

8. Beleuchtungsvorrichtung nach Anspruch 7, wobei während einer Bewegung des Magneten relativ zur Spule ein kleinster Abstand zwischen den Oberflächenteilen des zweiten Teils und der Spule im wesentlichen der gleiche ist wie der zwischen dem Magneten und der Spule.

9. Beleuchtungsvorrichtung nach einem der Ansprüche 6 bis 8, ferner mit einem zweiten Element (11) aus einem magnetisch leitenden Material, wobei das Element zwei Oberflächenteile hat, die in Bewegungsrichtung nebeneinander angeordnet sind, wobei sich mindestens ein Teil des zweiten Elements durch die Spule hindurch erstreckt und wobei während einer Bewegung des Magneten relativ zur Spule der kleinste Abstand zwischen der Spule und dem Magneten größer oder gleich demjenigen zwischen einem der Oberflächenteile und dem Magneten ist.

10. Beleuchtungsvorrichtung nach einem der Ansprüche 6 bis 9, wobei die Spule so angeordnet ist, daß sich eine Längsachse mindestens im wesentlichen senkrecht zur Bewegungsrichtung erstreckt und so, daß sich in einer vorgegebenen Position, in welcher der Abstand zwischen dem Magneten und der Spule am kleinsten ist, die Achse zum Magneten hin erstreckt.

11. Beleuchtungsvorrichtung nach Anspruch 9, wobei der Abstand zwischen den zwei Oberflächenteilen des zweiten Elements im wesentlichen gleich dem Abstand zwischen dem zweiten Teil des ersten Elements und dem Magneten ist.

12. Beleuchtungsvorrichtung nach einem der Ansprüche 9 bis 11, wobei mehrere Magnete (14) an dem ersten und dem zweiten Teil des Fahrzeugs anbringbar sind und wobei der Abstand zwischen den Magneten mindestens im wesentlichen identisch zum Abstand zwischen den zwei Oberflächenteilen des zweiten Elements ist.

13. Beleuchtungsvorrichtung nach einem der Ansprüche 9 bis 12, wobei eine Querschnittfläche eines sich durch die Spule hindurch erstreckenden Teils des zweiten Elements (11) kleiner ist als mindestens im wesentlichen irgendeine Querschnittfläche des ersten Elements (15) und Teilen des zweiten Elements (11), die sich nicht durch die Spule erstrecken.

14. Beleuchtungsvorrichtung nach einem der Ansprüche 9 bis 13, wobei das zweite Element (11) aus einem weichen ferromagnetischen Material, wie beispielsweise Trafoperm N3 oder Vacofer S1, besteht.

15. Beleuchtungsvorrichtung nach einem der Ansprüche 9 bis 14, wobei das zweite Element der Spule eine gerändelte Oberfläche hat.

16. Beleuchtungsvorrichtung nach einem der Ansprüche 9 bis 15, wobei das zweite Element (11) der Spule aus mehreren Metallschichten laminiert ist.

17. Beleuchtungsvorrichtung nach einem der vorstehenden Ansprüche, mit einem Element aus einem magnetisch leitenden Material, wobei das Element mindestens drei Oberflächenteile hat, die in Bewegungsrichtung nebeneinander angeordnet sind, wobei sich mindestens ein Teil des Elements durch die Spule erstreckt und wobei während einer Bewegung des Magneten relativ zur Spule der kleinste Abstand zwischen der Spule und dem Magneten größer oder gleich demjenigen zwischen irgendeinem der Oberflächenteile und dem Magneten ist.

## Revendications

1. Moyen d'illumination pour véhicule comprenant deux parties (1, 2) mobiles l'une par rapport à l'autre, lequel moyen d'illumination comprend :
- au moins une bobine (9) pouvant se fixer à une première partie du véhicule (3), laquelle bobine comprend une première sortie et une seconde sortie électriques ;
- un ou plusieurs aimants (14) ayant une surface opposée à la bobine et pouvant se fixer à une seconde (4) des deux parties du véhicule ; et
- plusieurs moyens émetteurs de lumière (13) ;
**caractérisé en ce que** la bobine et le ou les aimants sont conçus pour générer, lors du mouvement de la première partie par rapport à la seconde :
- un premier courant électrique allant de la première sortie électrique de la bobine à la seconde sortie électrique de la bobine, et une première tension entre les première et seconde sorties électriques ; et
- un second courant électrique allant de la seconde sortie électrique de la bobine à la première sortie électrique de la bobine, et une seconde tension entre les première et seconde sorties électriques ;
et dans lequel les premier et second courants électriques sont différents tandis que les première et seconde tensions sont différentes.

2. Moyen d'illumination, selon la revendication 1, dans lequel les moyens émetteurs de lumière (13) comprennent au moins une diode électroluminescente.

3. Moyen d'illumination, selon la revendication 2, dans lequel les moyens émetteurs de lumière (13) comprennent un premier et un second groupes de diodes électroluminescentes, et dans lequel le premier groupe de diodes électroluminescentes est conçu pour conduire un courant de la première sortie électrique de la bobine à la seconde sortie électrique de la bobine, tandis que le second groupe de diodes électroluminescentes est conçu pour conduire un courant de la seconde sortie électrique de la bobine à la première sortie électrique de la bobine.

4. Moyen d'illumination, selon la revendication 1, dans lequel la première tension se situe dans une plage de 1 à 3 volts, par exemple à une valeur de 2 volts, tandis que la seconde tension se situe dans une plage de 2 à 6 volts, par exemple à une valeur de 4 volts.

5. Moyen d'illumination, selon l'une quelconque des revendications 3 à 4, dans lequel les diodes électroluminescentes du premier groupe de diodes électroluminescentes ont une barrière de tension totale représentant 50 à 100 % de la première tension, tandis que les diodes électroluminescentes du second groupe de diodes électroluminescentes ont une barrière de tension totale représentant 50 à 100 % de la seconde tension.

6. Moyen d'illumination, selon l'une quelconque des revendications 1 à 5, dans lequel l'un au moins des aimants est placé à proximité d'un premier élément (15) fait d'un matériau magnétiquement conducteur ayant une surface face à la bobine, laquelle surface est plus grande que celle dudit et au moins un aimant.

7. Moyen d'illumination, selon la revendication 6, dans lequel :
- le premier élément (15) comprend une première et une seconde parties disposées de façon adjacente dans le sens du déplacement ;
- ledit et au moins un aimant est placé à proximité de la surface de la première des parties du premier élément, la surface faisant face à la bobine ; et
- la distance la plus petite, pendant le déplacement de l'aimant par rapport à la bobine, entre la bobine et la surface de la première partie est plus grande que celle entre la bobine et une surface de la seconde partie du premier élément.

8. Moyen d'illumination, selon la revendication 7, dans lequel la distance la plus petite, pendant le déplacement de l'aimant par rapport à la bobine, entre la partie de surface de la seconde partie et la bobine est essentiellement identique à celle entre l'aimant et la bobine.

9. Moyen d'illumination, selon l'une quelconque des revendications 6 à 8, comprenant en outre un second élément (11) fait d'un matériau magnétiquement conducteur, lequel élément possède deux parties de surface disposées de manière adjacente dans le sens du déplacement, et dans lequel une partie au moins du second élément s'étend à travers la bobine, et dans lequel la distance la plus petite, pendant le déplacement de l'aimant par rapport à la bobine, entre la bobine et l'aimant est supérieure ou égale à celle entre l'une quelconque des parties de surface et l'aimant.

10. Moyen d'illumination, selon l'une quelconque des revendications 6 à 9, dans lequel la bobine est disposée de sorte que son axe longitudinal soit au moins essentiellement perpendiculaire au sens de déplacement, et de sorte que, en une position prédéterminée où la distance entre l'aimant et la bobine est la plus petite, l'axe s'étende en direction de l'aimant.

11. Moyen d'illumination, selon la revendication 9, dans lequel la distance entre les deux parties de surface du second élément est essentiellement identique à la distance entre les deux secondes parties du premier élément et l'aimant.

12. Moyen d'illumination, selon l'une quelconque des revendications 9 à 11, dans lequel plusieurs aimants (14) peuvent se fixer à la première des deux parties du véhicule, et dans lequel la distance entre les aimants est au moins essentiellement identique à la distance entre les deux parties de surface du second élément.

13. Moyen d'illumination, selon l'une quelconque des revendications 9 à 12, dans lequel une zone en coupe d'une partie du second élément (11) s'étendant à travers la bobine est plus petite qu'au moins essentiellement toute zone en coupe du premier élément (15), et que les parties du second élément (11) ne s'étendant pas à travers la bobine.

14. Moyen d'illumination, selon l'une quelconque des revendications 9 à 13, dans lequel le second élément (11) est fait d'un matériau ferromagnétique mou tel que du Trafoperm N3 ou du Vacofer S1.

15. Moyen d'illumination, selon l'une quelconque des revendications 9 à 14, dans lequel le second élément de la bobine possède une surface moletée.

16. Moyen d'illumination, selon l'une quelconque des revendications 9 à 15, dans lequel le second élément (11) de la bobine est stratifié à partir de plusieurs feuilles de métal.

17. Moyen d'illumination, selon l'une quelconque des revendications précédentes, comprenant un élément fait d'un matériau magnétiquement conducteur, lequel élément comprend au moins trois parties de surface disposées de façon adjacente dans le sens du déplacement, et dans lequel une partie au moins de l'élément s'étend à travers la bobine, tandis que la distance la plus petite, pendant le déplacement de l'aimant par rapport à la bobine, entre la bobine et l'aimant est supérieure ou égale à celle entre l'une quelconque des parties de surface et l'aimant.
